(19) Europäisches Patentamt
European Patent Office
Office européen des brevets

(11) **EP 1 599 959 B1**

(12) **EUROPEAN PATENT SPECIFICATION**

(45) Date of publication and mention
of the grant of the patent:
**30.04.2008 Bulletin 2008/18**

(51) Int Cl.:
**H04L 1/00** (2006.01)

(21) Application number: **03713117.4**

(22) Date of filing: **24.02.2003**

(86) International application number:
**PCT/SE2003/000294**

(87) International publication number:
**WO 2004/075472 (02.09.2004 Gazette 2004/36)**

(54) **METHOD AND SYSTEM FOR PERFORMING FAST CHECKSUM OPERATIONS IN A GPRS COMMUNICATION SYSTEM UTILISING TUNNELLING**

VERFAHREN UND SYSTEM ZUR DURCHFÜHRUNG SCHNELLER PRÜFSUMMENBERECHNUNGEN IN EINEM GPRS-KOMMUNIKATIONSSYSTEM MITTELS TUNNELN

PROCEDE ET SYSTEME PERMETTANT D'EFFECTUER DES OPERATIONS DE SOMME DE CONTROLE RAPIDES DANS UN SYSTEME DE COMMUNICATION GPRS UTILISANT LA TUNNELLISATION

(84) Designated Contracting States:
**AT BE BG CH CY CZ DE DK EE ES FI FR GB GR HU IE IT LI LU MC NL PT SE SI SK TR**

(43) Date of publication of application:
**30.11.2005 Bulletin 2005/48**

(73) Proprietor: **TELEFONAKTIEBOLAGET LM ERICSSON (publ)**
**164 83 Stockholm (SE)**

(72) Inventors:
• **BACKMAN, Jan**
**S-442 71 Kärna (SE)**
• **MELHAGE, Sverker**
**S-429 44 Särö (SE)**

(74) Representative: **Vejgaard, Christian et al**
**Ericsson AB**
**Patent Unit Antennas & Microwaves**
**417 56 Göteborg (SE)**

(56) References cited:
CA-A1- 2 353 119          US-A- 5 815 516

• **DATABASE WPI Week 200321, Derwent Publications Ltd., London, GB; Class W01, AN 2003-217289, XP002991916 & JP 2003 046565 A 14 February 2003**

**Description**

<u>Field of the invention</u>

The present invention relates to a method and system for performing fast checksum operations on communication systems utilising tunnelling.

<u>Background of the invention</u>

Checksum calculation is one method that is commonly used in telecommunication systems in order to assure that the content of information transmitted is unaltered.

For instance in the IP protocol, a header checksum value HC is inserted in a field in the header. The header checksum is calculated C over the entire header with the header checksum field set to zeroes. Upon receiving the IP packet, the header checksum value C is calculated again and compared with the value indicated in the checksum field, HC. If they are the same, the content of the header is deemed intact.

According to the Internet Engineering Task Force (IETF) and the Internet Engineering Steering Group (IESG) specification RFC1071 a cyclical redundancy check is described, which converts a string of arbitrary length to a 16-bit checksum. A packet is thought of as a string of two-byte words, (a,b), (c,d), (e,f)..., whereby if the string of bytes is odd, a byte of zero is added to the string. The checksum function is based on utilising the one's complement sum, designated as + in the following.

Initially, two two-byte words of the string are added with one another and the carry is added to the sum. This process is iterated on the sum and the next word until all words in the string are taken. Then, one's complement is performed. This checksum, HC, is at packet transmission stored in the header of the packet and can be written as

$$HC = {\sim}C = {\sim}((a, b) + (c, d) + (e, f).....),$$

whereby - denotes one's complement.

The order of performing the one's complement on the two-byte words does not matter.

When reading the packet, the checksum calculation C is performed on the same (received) string in the packet. If

$$HC + C = 0xFFFF \text{ (i.e. +0),}$$

the transmitted string is deemed unaltered.

The IP header comprises a time to live field, TTL, whose value is decremented every time an IP packet passes a router. However, when a packet is initially transmitted, the header checksum value, HC, is performed on the string covering the TTL field being assigned to a predetermined start value.

Instead of recalculating the header checksum value every time a packet passes a router, the following calculation, given in RFC 1624 is performed:

$$HC' = {\sim}(C + (-m) + m') = {\sim}({\sim}HC + {\sim}m + m'),$$

whereby m is the value, of the 16 bit TTL field before it is altered, m' is the value of the field after the change, HC is the header checksum value before the change and HC' is the desired new value which is to replace the header checksum HC in the packet, due to the change from m to m' in order to let the header checksum reflect the change in TTL value such that the possibility for subsequent error detection remains intact.

As is known, IP networks are widely used in telecommunication networks including backbone networks. General Packet Radio Systems (GPRS) networks for instance make use of the IP packet delivery scheme.

The performance of IP forwarding in a typical GPRS platform is, although limited by wire speed, packet size independent. The tunnelling performance is however depending on the length of the packet, since the checksum for the UDP protocol need to be calculated over the entire packet length. The GTP protocol is relying on the UDP checksum and has therefore no checksum of its own.

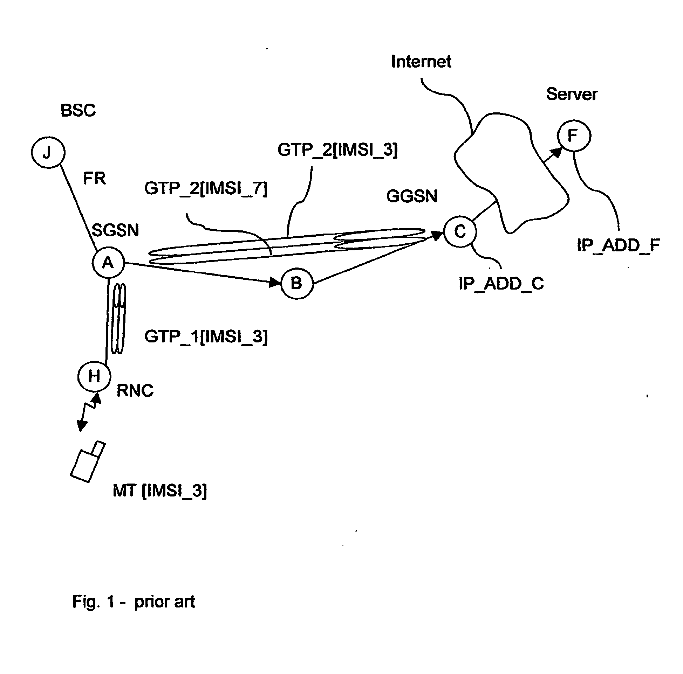

In fig. 1, a known example of a GPRS system has been shown comprising a mobile station, MT, which couples to a serving node A (SGSN), which then again couples to a gateway node C (GGSN). Node C associated with the Internet address IP_ADD_C couples over the Internet to a server node F being associated with the exemplary Internet address IP_ADD_F. Moreover a Radio Network Centre (RNC) and a Base station Station Controller (BSC) are coupled to node A.

By way of example, a WWW-client application (e.g. browser) in the mobile station has made a connection to server F on the Internet. The mobile station for instance transmits a Hypertext Transfer Protocol (HTTP) request to server F. The TCP/IP application in the mobile station places the HTTP information in the payload section of a TCP/IP packet denoted IP_F/ TCP_29. The IP packet with destination address IP_F has a cyclical redundancy check value CRC_4 for the IP header and a value CRC_4 covering the UDP and payload fields.

For simplicity, the packet is followed from node A. At reception of the packet in the GPRS network, SGSN node A selects a tunnel, i.e. GTP tunnel GTP_2, being associated with mobile station MS being identified by IMSI_3. The above data is encapsulated in an IP/UDP packet comprising destination address IP_C of node C, GGSN and a corresponding port number UDP_10.

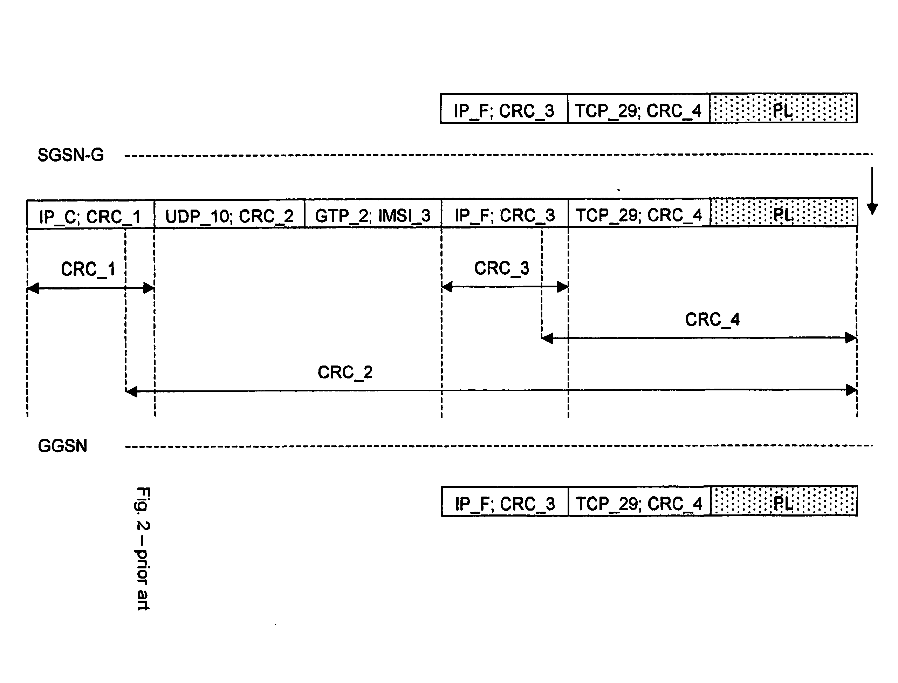

The complete packet as being transmitted in the GPRS network has the layout as shown in fig. 2 in which a first IP packet, IP_F - TCP_29 - PL, is encapsulated in another packet, IP_C - UDP_10 - GTP_2, at node A. In GPRS, the tunnelled packet may have a length up to 1502 bytes.

UDP/IP packets contain two checksums. One checksum is situated in the IP header and the other one in the UDP header. The IP header checksum covers most fields in the IP header, but no data except that. The checksum in the UDP or TCP header is calculated over the header itself, the payload and a pseudo IP header that contains the source and destination IP addresses.

Tunnelling UDP/IP over UDP/IP implies that the outer UDP checksum covers the entire inner UDP/IP packet. Since the UDP checksum covers all payload and that data is not changed when tunnelled, the same data is covered twice by the same checksum algorithm.

As illustrated in fig. 2, the UDP and TCP protocols contain a checksum calculated over the entire length of respectively the tunnelled packet and the encapsulated packet - e.g. the cyclical redundancy value CRC_2 is performed on segments of the string that overlaps values CRC_3 and CRC_4.

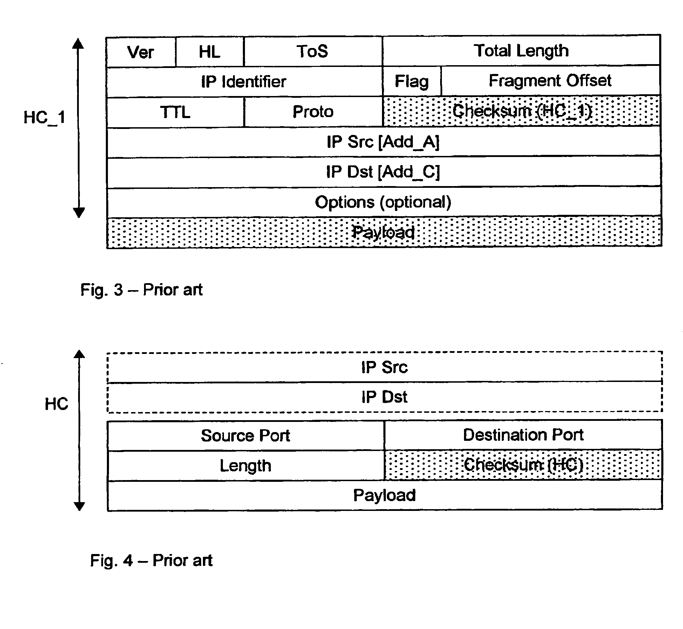

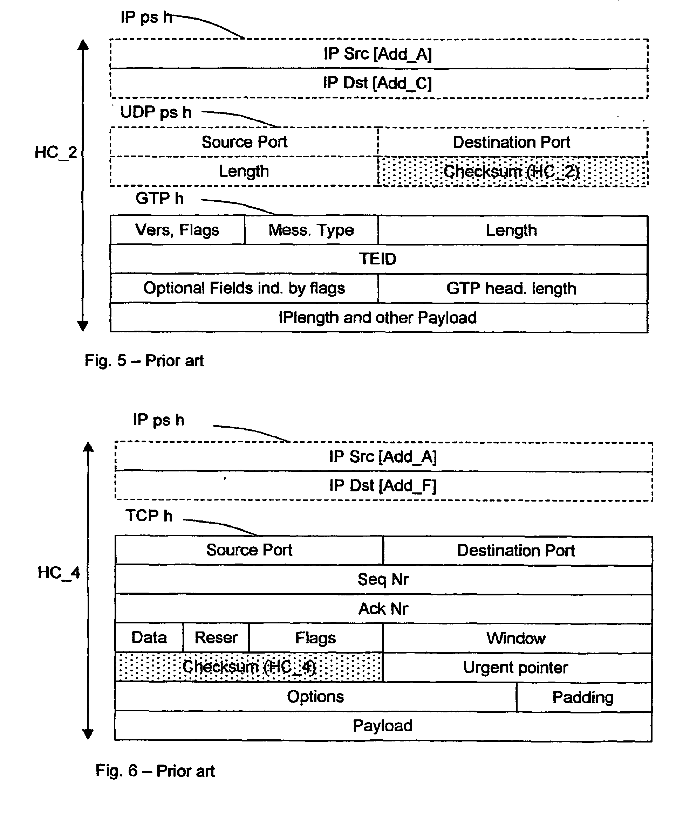

Figs. 3 - 6 show the well known formats for the IP packet, the UDP packet, the GTP packet and the TCP packet respectively, and their corresponding cyclical redundancy check values CRC_IP, CRC_UDP; CRC_GTP; CRC_TCP and the covering of these values as illustrated by the arrows to the left.

As mentioned above, some of the CRC values are performed on so-called pseudo headers, that is, on fields which are not part of the packet in question but which belongs to the encapsulating packet (IP) and which forms part of the CRC calculation. These pseudo fields have been indicated in the figure by the dashed fields.

Moreover, the CRC value of a particular frame format does not cover the own CRC field and various other fields. Those values, which are not covered by a respective CRC value has been indicated by, patterned fields.

Prior art document US5815516 shows a method in which, the conventional order of an internet datagram transmission is reversed or reordered so that the data is sent first and then the header is sent second. Using the invention, the TCP module of the sending node only reads the data once, while it is being sent as a first internet datagram data fragment and the checksum is calculated during transmission of the first internet datagram data fragment. Then when the header is sent, the TCP module of the sending node already has the checksum information calculated for the data and inserts the checksum into the header that is sent as a second internet datagram header fragment. The IP module of the receiving node receives and reassembles the internet datagram without requiring architectural change or modification to the internet protocol. In other words, the receiving IP module performs a conventional function of fragmentation reassembly.

Abstract relating to JP203046565 discloses an insertion unit inserting a desired IP address into address fields and one's complement sum of 16 bit data into the checksum field of a generated primary header. An extraction unit extracts the inserted data and an arithmetic unit calculates one's complement of each extracted data as a checksum value. A delay unit, delays the output of the checksum field which is inserted into the secondary header.

Although the methods according to the two above cited documents may speed up the process of transmitting and error checking long fragmented packets for an individual stream, the overall computational load on the respective nodes are not decreased.

<u>Summary of the invention</u>

According to one aspect of the invention, the checksum operation according to the invention is utilised on the GTP tunnelling protocol in GPRS systems for GSM and UMTS, implemented as a protocol carried over TCP/IP or UDP/IP.

The invention decreases the performance cost for tunnelling packets and makes the performance cost independent of the packet length when TCP/IP and UDP/IP are tunnelled over TCP or UDP based tunnelling protocols.
It is a first object of the invention to set forth a method for obtaining efficient tunnelling of long IP packets.

This object has been accomplished by claim 1.

It is a further object to set forth a method for obtaining efficient de-tunnelling.

This object has been accomplished by claim 2.

It is a further object to set forth a method for obtaining efficient re-tunnelling.

This object has been achieved by the subject matter set forth in claim 4.

Further advantages will appear from the following detailed description of the invention.

Brief description of the drawings

Fig. 1    shows an excerpt of an exemplary prior art GPRS network,

fig. 2    shows an exemplary packet used in the GPRS network, shown in fig. 1, and indications of which fields in the packet various cyclical redundancy check values cover,

fig. 3    discloses the known IP packet format,

fig. 4    discloses the known UDP packet format,

fig. 5    discloses the known GTP '99 tunnel packet format,

fig. 6    discloses the known TCP packet format,

fig. 7    discloses calculated and stored checksums for a tunnelled or de-tunnelled packet according to a first embodiment of the invention,

fig. 8    discloses CRC values of a second embodiment of the invention for an encapsulated packet used in a GPRS network,

fig. 9    discloses packets of a third embodiment of the invention of a packet being re-tunnelled in a GPRS network,

fig.10    discloses the processing of a fragmented packet in a known network, and

fig. 11    discloses the processing of a fragmented packet according to a fourth embodiment of the invention.

Detailed description of preferred embodiments of the invention

Tunnelling and de-tunnelling

According to a first embodiment of the invention, the stored checksum of a packet is re-used when tunnelling it according to another packet protocol that makes use of the same checksum algorithm.

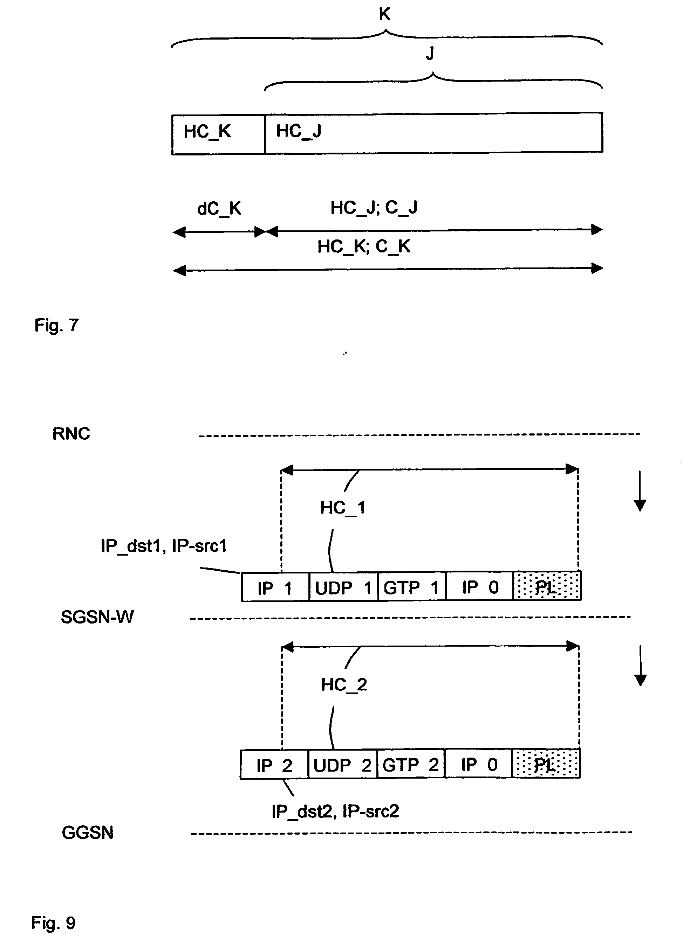

In fig. 7, a diagram for illustrating the first embodiment of the invention has been provided, showing a first string J of a packet being encapsulated in another packet with a header K.

In the following, the notation C is used for calculated values of the checksum and HC is used for stored values of the checksum. For instance the calculated value C_J corresponds to stored checksum value HC_J and C_K corresponds to HC_K. The entity dC_K corresponds to the calculated value of the header string K.

According to the invention, it applies that

$$I \qquad HC' = \sim(\sim HC + \sum \sim m[x1..xn] + \sum m'[y1..yn]),$$

where m indicates the checksum value of x1 - xn portions of strings being removed from a given string and m' indicates y1 - yn portions added to a given string having a stored checksum value HC. Hence

$$\text{II} \qquad HC' = \sim(\sim HC + C\_m'),$$

applies to the special case where a known string with a stored checksum HC is added to another string m' with a checksum value C_m'.

Since the checksum can be updated independently of the position of the added value or the individual fields, which give rise to a changed header value, values can be added in arbitrary order. According to the invention, these properties are used to pre-calculate parts of the checksum and to compose new header checksum values instead of carrying out compete re-calculations when tunnelling packets.

According to the first embodiment of the invention a method is provided for performing tunnelling wherein, a first packet (J) is received having a stored first checksum value (HC_J) covering at least portions of the first packet, and wherein the first packet (J) is encapsulated by providing a header (K) to the first packet.

Instead of calculating a checksum value of the string of the first packet J, a second checksum value (dC_K) covering at least portions of the header (K) but not covering portions covered by the first checksum is calculated.

Subsequently a third checksum value (HC_K) is calculated and assigned according to:

$$\text{III} \qquad HC\_K \equiv HC\_J + \sim dC\_K,$$

The assigned checksum value (HC_K) is subsequently stored in the header (K), and the encapsulated packet (J, K) is transmitted.

According to the invention, the same mechanism that is used for tunnelling is also used in the opposite direction, that is, for verification of the checksum when de-tunnelling packets. The resulting checksum from the calculations should be compared with the original checksum of the tunnelled packet If the checksums are not identical, the packet should be discarded.

The method for delta-calculation (dC_K) of the checksums is used to verify the respective checksum at the tunnel end. This is done in a similar way as for tunnelling above, but instead of using the original packet as source, the checksum is calculated for verification against the inner packet checksum.

The method of performing de-tunnelling comprises the steps of,

receiving a tunnelled packet (K) comprising an encapsulated packet (J),

extracting a stored a first checksum value (HC_J) covering at least portions of the encapsulated packet,

calculating a second checksum value (dC_K) covering at least some portions of the header (K) but not covering portions covered by the first checksum value (HC_J), calculating a third checksum value (HC_J + ~dC_K) as one's complements sum of the first checksum value and one's complement of the second checksum value,

extracting a stored fourth checksum value (HC_K) corresponding to the tunnelled packet

comparing the third and the fourth checksum value with one another:

$$\text{IV} \qquad HC\_K = HC\_J + \sim dC\_K \ ?$$

If said third and fourth checksum values are equal deeming at least the header (K) to be intact after transmission.

Non-volatile parts of the checksum can be pre-calculated at the tunnel endpoint also, to speed up verification of the CRC.

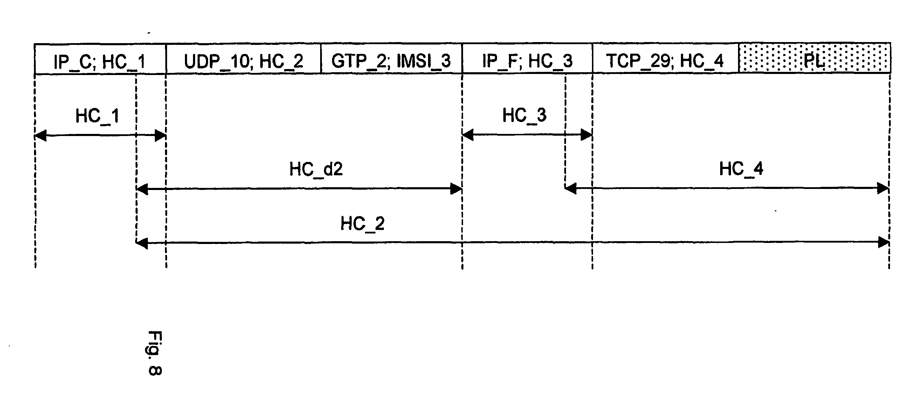

According to another embodiment of the invention, shown in fig. 8, the checksums that a TCP or UDP payload packet contains is used in the calculation of the checksum in the UDP header of the tunnelling protocol.

This procedure shall be explained in more detail with regard to fig. 8 and the exemplary scenario, given in fig. 1, for illustrating how the speed of processing the checksum values can be enhanced when tunnelling a message to server F. For illustrative simplicity only one of the stored values HC are shown for a given string segment, although respective calculated values, C (not shown) exist for the corresponding entities. Moreover, reference should be given to fig. 3-6.

When an IP datagram from the mobile station MS intended for server F is received in SGSN node A, a tunnel between A and C is either set up or re-used for transporting the IP datagram. In this situation an IP/ TCP datagram to port 29 at IP address F with payload PL from mobile station IMSI_3 shall be encapsulated in a GTP tunnel GTP_2.

Instead of calculating the checksum value for HC_2 over the tunnelled information as from the IP header IP _C, the checksum is calculated as:

$$\text{V} \qquad HC\_2 = \sim(\sim HC\_4 + C\_3' + C\_d2)$$

where

$$\text{VI} \qquad C\_d2 = C\_p2 + C\_q2$$

where

C_p2 amounts to a value that can be pre-calculated for non-volatile parts of the string (IP_1 src, IP_1_dst, UDP_1 _src, UDP 1_dst, GTP-fields <except length>), i.e. parts for the tunnel GTP_2, which are independent of which entity that uses the tunnel, i.e. Mobile station designated IMS13 or somebody else.

C_q2 amounts to the volatile parts of the string. This part shall be calculated (i.e. UDP_length, GTP_length)

HC_1 may be calculated according to HC_1 1 = ~C_1, since the calculation and retrieval of a pre-calculated value is of comparable speed.

C_3' is also calculated, but the IP destination address and the IP source address are excluded since the checksum value is already included in the UDP header. Subsequently, C_3' is updated with a TTL-1 according to the usual routing principles.

In general, it should be noted that where the above calculations cover encapsulated TTL values, these must be included in the calculations.

HC_4 is inserted directly in the expression above.

Hence, by re-using header checksums indicated in headers in the expression above, the process of encapsulating packets in a tunnelled message including providing the relevant checksum fields can be performed much faster than re-calculating checksums over entire string sections.

In other words, the new checksum HC_2 is calculated by taking the checksum from the TCP header HC_4 and updating the checksum as if the IP addresses were not part of the checksum. After this, the checksum should be updated with the adding of the checksum from the tunnelled IP header HC_3'. Finally, the checksum is updated again, this time adding the relevant information from the tunnel checksum that is calculated over the outer UDP protocol header, the IP addresses of the tunnel and additional tunnel headers, such as a GTP header, HC_d2. This part of the checksum can be calculated in advance and reused for every packet that is tunnelled.

Verification at tunnel end is done in the same manner as mentioned above.

Should the encapsulated data be compromised, higher layers in the protocol will take care of whether data should be re-transmitted.

In GRE (Generic Routing Encapsulation) tunnels, the checksum is calculated with the same checksum algorithm as for IP. This means that the invention is valid also when using the checksum option for GRE tunnels.

It is noted that the performance enhancements according to the invention can be implemented in software or in hardware.

Re-tunnelling

Attention should now be given to fig. 9 in which an IP-packet, IP_0, PL is re-tunnelled in a given node, such as in a SGSN-W node (SGSN-WCDMA) which treats incoming packets according to the following method.

In the given situation the packet comprises at least a first IP header portion having an IP source address, IPsrc_1, and an IP destination address, IPdst_1, a first intermediate portion (UDP_1) and a payload, a first stored checksum, HC_1, stored in the first intermediate portion covering at least portions of the first IP portion, the first intermediate portion and the payload.

According to the invention, the SGSN reads the first stored checksum value from the intermediate portion, and discards the first IP header portion and the first intermediate portion from the packet, and discards a GTP field associated with a GTP tunnel, GTP_1.

Subsequently, the SGSN adds a second IP header portion having an IP source address, IPsrc_2, an IP destination address, IPdst_2_1, a second intermediate portion to the packet UDP_2, and a second GTP tunnel header, GTP_2.

Subsequently, a second checksum value covering portions of the second IP portion the second intermediate portion, the GTP field and the payload, is calculated according to

VII $\quad HC\_2 = \sim(\sim HC\_1 + \sim IPsrc\_1 + \sim IPdst\_1 + IPsrc\_2 + IPdst\_2 + \sim GTP\_1 + GTP\_2),$

The above second checksum value, HC_2, is stored in the second intermediate portion UDP_2.

As above, the SGSN may perform a TTL update on the payload portion (IP_0, PL) of the packet, although this is normally not done in GPRS networks.

According to one advantageous embodiment of the invention, the node may be arranged such that the GTP field or the checksum value of the GTP field is kept unchanged. Thereby, the checksum calculation above is simplified.

Fragmentation

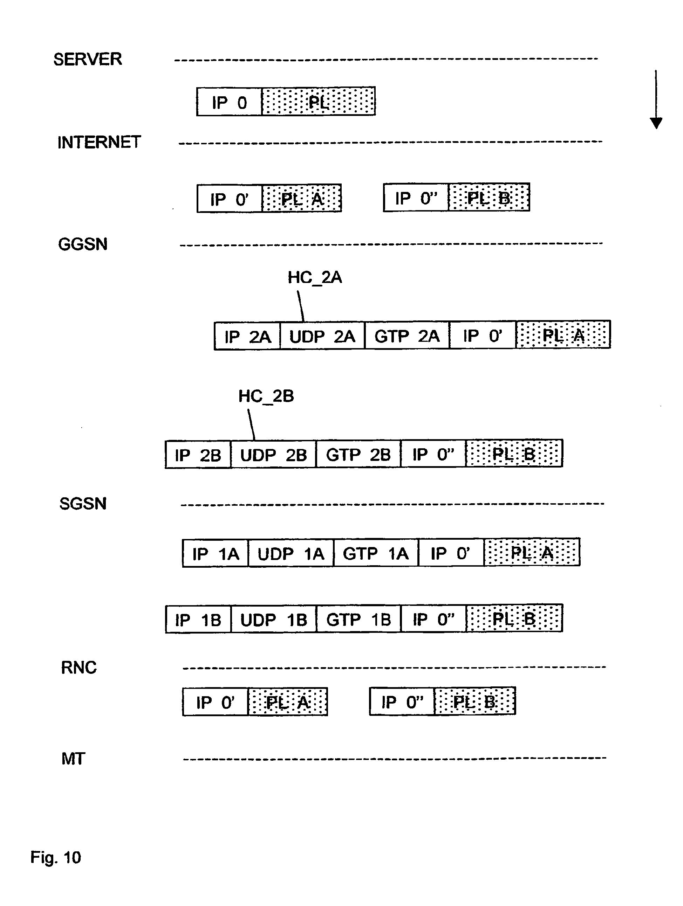

In fig. 10 a known example of a how a fragmented packet is delivered from a WWW server over the Internet, further over a GGSN node, a SGSN node, to an RNC and further on to a mobile terminal MT.

As shown, an exemplary Internet packet with header IP_0, and payload PL is fragmented due to limitations in the transfer unit size of links, whereby two fragments IP_0' with a first part of the payload PL_A and a a subsequent fragment IP _0" with a subsequent part of the payload appear, the respective IP header indicating the order of fragment. Depending on packet size more fragments may follow.

The prior art GGSN tunnels the two above fragments in corresponding tunnels as shown in fig. 10, whereby corresponding checksum values HC_2A and HC_2B are calculated for each encapsulated packet, in the respective TCP or UDP field, whatever applies.

The two above encapsulated packets are re-tunnelled in the SGSN node leading to renewed calculation of checksum values in the respective intermediate fields.

The RNC receives individual fragments and forwards those to the mobile terminal in which the original payload is completed.

According to an advantageous embodiment of the invention, several steps are undertaken in order to speed up the process of delivering packets through the same way or through similar nodes in a network as in fig. 10.

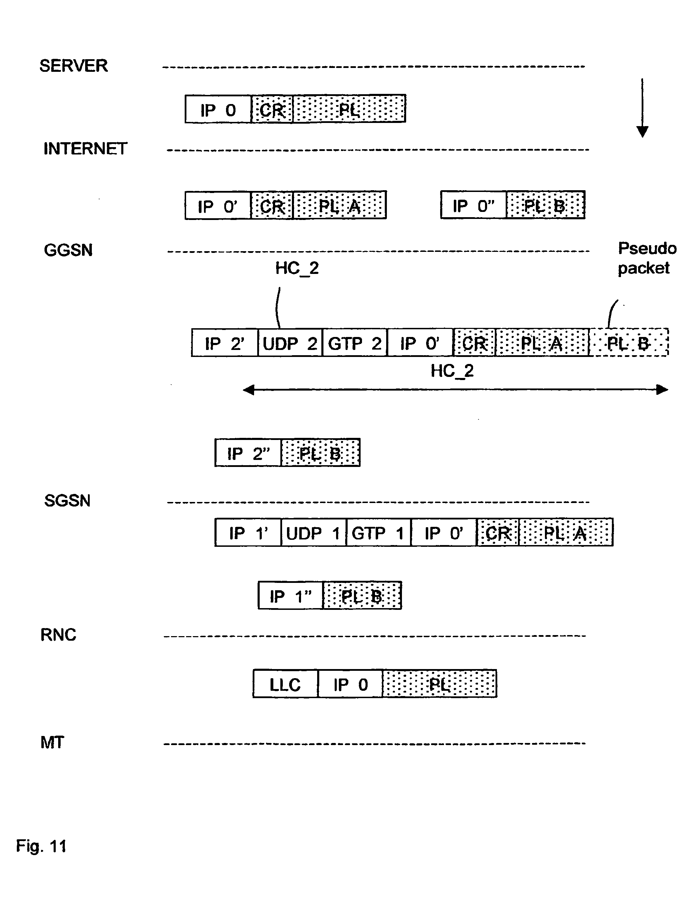

In fig. 11, tunnelling between at least a first serving node and a second serving node (GGSN, SGSN) has been shown.

The GGSN receives IP fragments IP_0', PL_A, IP_0", Pt_ B of a first IP packet IP_0 having a first payload PL, whereupon the first serving node buffers received IP fragments IP_0', IP_0" including a first fragmented IP packet IP_ 0' until all fragments of the first given IP packet IP_0 are received.

Subsequently, the GGSN forms a pseudo packet comprising a first tunnel IP header IP_2' indicative of a first fragment, an intermediate portion UDP_2, a tunnel field GTP_2, the IP header of the first fragmented IP packet IP_0' and all payload fragments of the first IP packet PL_A, PL_B..., and calculates a checksum value HC_2 on the pseudo packet covering at least all payload fragments of the first IP packet and storing the checksum value in the intermediate portion TCP/ UDP 2.

Advantageously, the calculated checksum value HC_2 furthermore covers the intermediate portion UDP_2, the tunnel field GTP_2, the IP header of the first fragmented IP packet IP_0'.

According to an advantageous embodiment of the invention the calculation of the checksum value HC_2 is performed as described with regard to fig. 7 and 8 above.

The pseudo part of the packet, as indicated by punctured lines, is removed and the first node is transmitting a first tunnelling packet including the tunnel IP header IP_2', an intermediate header UDP_ 2 including the calculated checksum value HC_2, a tunnel field GTP_2, the IP header of the first fragmented IP packet IP_0' and the first payload fragment of the first IP packet PL_A.

When the first fragmented tunnelled packet arrives at the SGSN the first fragmented packet is re-tunnelled by replacing the tunnel IP header IP_2; IP_1, the intermediate portion UDP_2; UDP_1, the GTP tunnel field GTP_2, GTP_1.

Subsequent packets are delivered with great savings in processing power / number of instructions.

From the subsequent fragments, the GGSN forms respective packets each one including only a subsequent tunnel IP header IP_2' indicative of a subsequent fragment and a subsequent payload fragment PL_B.

If there are more than two fragments, subsequent fragments are formed the same way.

The subsequent packets are re-tunnelled in the SGSN in such a way that the tunnel IP header IP_2" is exchanged with a re-tunnelling IP header IP_1 ", and the rest of the subsequent tunnelling packet being un-amended.

The RNC according to the invention buffers fragments of a given IP tunnel header IP_1'; IP_1 "; IP _1'" for a given IP ID value until all fragments are received and resolves a first IP header IP_0 from the first tunnelling packet IP_0'.

Finally the RNC combines the resolved first IP header and all payloads in a packet destined for the access net LLC, IP_0, PL.

As shown in fig. 11, also savings on the radio interface is accomplished due to the reductions in overhead.

**Claims**

1. Method of performing tunnelling comprising the steps of,

- receiving a first packet (J) having a stored first checksum value (HC_J) covering at least portions of the first packet,
- encapsulating the first packet (J) by providing a header (K) to the first packet,
- calculating a second checksum value (dC_K) covering at least portions of the header (K) but not covering portions covered by the first checksum,
- calculating and assigning a third checksum value (HC_K) as one's complements sum of the first checksum value and one's complement of the second checksum value (III, V),
- storing the assigned checksum value (HC_K) in the header (K),
- transmitting the encapsulated packet (J, K).

2. Method of performing de-tunnelling comprising the steps of,

- receiving a tunnelled packet (K) comprising an encapsulated packet (J),
- extracting a stored first checksum value (HC_J) covering at least portions of the encapsulated packet,
- calculating a second checksum value (dC_K) covering at least some portions of the header (K) but not covering portions covered by the first checksum value (HC_J),
- calculating a third checksum value (HC_J + ~dC_K) as one's complements sum of the first checksum value and one's complement of the second checksum value,
- extracting a stored fourth checksum value (HC_K) corresponding to the tunnelled packet,
- comparing the third and the fourth checksum value with one another and if said third and fourth checksum values are equal deeming at least the header (K) to be intact after transmission (IV).

3. Method according to claim 2, additionally comprising the step of performing TTL update on the first packet (J).

4. Method of performing re-tunnelling comprising the steps of

- receiving a packet comprising at least a first IP header portion (IP_1) having an IP source address (IPsrc_1) and an IP destination address (IPdst_1) a first intermediate portion (UDP_1) and a payload (IP_0, PL), a first stored checksum, (HC_1) stored in the first intermediate portion (UDP_1) covering at least portions of the first IP portion (IP_1), the first intermediate portion (UDP_1) and the payload (IP_0, PL),
- reading the first stored checksum value (HC_1) from the intermediate portion (UDP_1),
- discarding the first IP header portion (IP_1) and the first intermediate portion (UDP_1) from the packet,
- adding a second IP header portion (IP_2) having an IP source address (IPsrc_2) and an IP destination address (IPdst_2) and a second intermediate portion (UDP_2) to the packet,
- performing one's complement sum on at least one's complement of the first IP source address (~IPsrc_1), one's complement of the first IP destination address (~IPdst_1), the second IP destination address (IPdst_2) and the second IP source address (IPsrc_2),
- computing a second checksum value by one's complement on the sum (HC_2, VII),
- storing said second checksum value in the second intermediate portion (UDP_2).

5. Method according to claim 4, wherein the payload portion comprises a GTP field associated with a GTP tunnel, wherein the GTP field is kept unchanged.

6. Method according to claim 4, moreover comprising the steps

- discarding a first GTP field (GTP_1) associated with a first GTP tunnel from the received packet,
- adding a second GTP field (GTP_2) associated with a second GTP tunnel to the tunnelled packet, and wherein

the one's complement sum further being performed on the second GTP field (GTP_2) and one's complement on the first GTP field (~GTP_1).

**7.** Method according to claim 4, comprising the additional step of performing TTL update on the payload portion (IP_0, PL) of the packet.

**8.** Method according to claim 1, moreover involving tunnelling between at least a first serving node and a second serving node (GGSN, SGSN), the first node receiving IP fragments (IP 0', PL_A, IP_0", PL_B) of a first IP packet (IP_0) having a first payload (PL), wherein
the first serving node

- buffering received IP fragments (IP_0', IP_0") including a first fragmented IP packet (IP_0') until all fragments of the first given IP packet (IP_0) are received,
- forming a pseudo packet comprising a first tunnel IP header (IP-2') indicative of a first fragment, an intermediate portion (UDP_2), a tunnel field (GTP_2), the IP header of the first fragmented IP packet (IP_0') and all payload fragments of the first IP packet (PL__A, PL_B...), wherein
- the second checksum value (HC_2) is calculated on the pseudo packet covering at least all payload fragments of the first IP packet and storing the checksum value in the intermediate portion (TCP/ UDP_2, III, V),
- forming and transmitting a first tunnelling packet comprising the tunnel IP header (IP_2'), an intermediate portion (UDP_2) including the calculated checksum value (HC_2), a tunnel field (GTP_2), the IP header of the first fragmented IP packet (IP_0') and the first payload fragment of the first IP packet (PL_A).

**9.** Method according to claim 8, forming and transmitting a subsequent tunnelling packet comprising
a subsequent tunnel IP header (IP_2') indicative of a subsequent fragment and a subsequent payload fragment (PL_B).

**10.** Method according to claim 8, wherein the second calculated checksum value (HC_2) furthermore covers the intermediate portion (UDP_2), the tunnel field (GTP_2), the IP header of the first fragmented IP packet (IP_0').

**11.** Method according to claim 8, wherein the first fragmented packet is re-tunnelled by replacing the tunnel IP header (IP_2; IP_1), the intermediate portion (UDP_2; UDP_1), the GTP tunnel field (GTP_2, GTP_1).

**12.** Method according to claim 11, wherein the checksum value of the intermediate portion is computed according to any of claims 4 - 6.

**13.** Method according to claim 9, wherein
the tunnel IP header (IP_2") of the subsequent tunnelling packet is exchanged with a re-tunnelling IP header (IP_1"), the rest of the subsequent tunnelling packet being un-amended.

**14.** Method according to claim 13, wherein de-tunnelling is performed by

- buffering fragments of a given IP tunnel header (IP_1'; IP_1 "; IP_1'") until all fragments are received,
- resolving a first IP header (IP_0) from the first tunnelling packet (IP_0'),
- combining the resolved first IP header and all payloads in a packet destined for the access net (LLC, IP_0, PL).

**Patentansprüche**

**1.** Verfahren zur Durchführung von Tunnelung, die folgenden Schritte umfassend:

- Empfangen eines ersten Pakets (J) mit einem gespeicherten ersten Prüfsummenwert (HC_J), der zumindest Abschnitte des ersten Pakets einbezieht,
- Verkapseln des ersten Pakets (J), indem das erste Paket mit einem Header (K) versehen wird,
- Berechnen eines zweiten Prüfsummenwerts (dC_K), der zumindest Abschnitte des Headers (K) einbezieht, aber Abschnitte, die in die erste Prüfsumme einbezogen sind, nicht einbezieht,
- Berechnen und Zuweisen eines dritten Prüfsummenwerts (HC_K) als Einerkomplementsumme aus dem ersten Prüfsummenwert und dem Einerkomplement des zweiten Prüfsummenwerts (III, V),
- Speichern des zugewiesenen Prüfsummenwerts (HC_K) im Header (K),
- Übertragen des verkapselten Pakets (J, K).

**2.** Verfahren zur Durchführung von Enttunnelung, die folgenden Schritte umfassend:

- Empfangen eines getunnelten Pakets (K), das ein verkapseltes Paket (J) umfaßt,
- Extrahieren eines gespeicherten ersten Prüfsummenwerts (HC_J), der zumindest Abschnitte des verkapselten Pakets einbezieht,
- Berechnen eines zweiten Prüfsummenwerts (dC_K), der zumindest einige Abschnitte des Headers (K) einbezieht, aber Abschnitte, die in den ersten Prüfsummenwert (HC_J) einbezogen sind, nicht einbezieht,
- Berechnen eines dritten Prüfsummenwerts (HC_J + ~dC_K) als Einerkomplementsumme aus dem ersten Prüfsummenwert und dem Einerkomplement des zweiten Prüfsummenwerts,
- Extrahieren eines gespeicherten vierten Prüfsummenwerts (HC_K), der dem getunnelten Paket entspricht,
- Vergleichen des dritten und des vierten Prüfsummenwerts miteinander, und wenn der dritte und der vierte Prüfsummenwert gleich sind, Annehmen, daß zumindest der Header (K) nach der Übertragung (IV) unbeschädigt ist.

3. Verfahren nach Anspruch 2, zusätzlich den folgenden Schritt umfassend: Durchführen einer TTL-Aktualisierung am ersten Paket (J).

4. Verfahren zur Durchführung erneuter Tunnelung, die folgenden Schritte umfassend:

- Empfangen eines Pakets, das mindestens umfaßt: einen ersten IP-Headerabschnitt (IP_1) mit einer IP-Quellenadresse (IPsrc_1) und einer IP-Zieladresse (IPdst_1), einen ersten Zwischenabschnitt (UDP_1) und eine Nutzlast (IP_0, PL), eine erste gespeicherte Prüfsumme (HC_1), die im ersten Zwischenabschnitt (UDP_1) gespeichert ist und zumindest Abschnitte des ersten IP-Headerabschnitts (IP_1), des ersten Zwischenabschnitts (UDP_1) und der Nutzlast (IP_0, PL) einbezieht,
- Lesen des ersten gespeicherten Prüfsummenwerts (HC_1) aus dem Zwischenabschnitt (UDP_1),
- Aussondern des ersten IP-Headerabschnitts (IP_1) und des ersten Zwischenabschnitts (UDP_1) aus dem Paket,
- Hinzufügen eines zweiten IP-Headerabschnitts (IP 2) mit einer IP-Quellenadresse (IPsrc 2) und einer IP-Zieladresse (IPdst_2) und eines zweiten Zwischenabschnitts (UDP_2) zum Paket,
- Durchführen einer Einerkomplementsummenbildung aus mindestens dem Einerkomplement der ersten IP-Quellenadresse (~IPdst_1), dem Einerkomplement der ersten IP-Zieladresse (~IPsrc_1), der zweiten IP-Zieladresse (IPdst 2) und der zweiten IP-Quellenadresse (IPsrc_2),
- Berechnen eines zweiten Prüfsummenwerts durch Bilden des Einerkomplements der Summe (HC_2, VII),
- Speichern des zweiten Prüfsummenwerts im zweiten Zwischenabschnitt (UDP_2).

5. Verfahren nach Anspruch 4, wobei der Nutzlastabschnitt ein GTP-Feld umfaßt, das einem GTP-Tunnel zugeordnet ist, wobei das GTP-Feld unverändert belassen wird.

6. Verfahren nach Anspruch 4, ferner die folgenden Schritte umfassend:

- Aussondern eines ersten GTP-Feldes (GTP_1), das einem ersten GTP-Tunnel zugeordnet ist, aus dem empfangenen Paket,
- Hinzufügen eines zweiten GTP-Feldes (GTP_2), das einem zweiten GTP-Tunnel zugeordnet ist, zum getunnelten Paket, und wobei

die Einerkomplementsumme ferner aus dem zweiten GTP-Feld (GTP_2) und dem Einerkomplement des ersten GTP-Feldes (~GTP_1) gebildet wird.

7. Verfahren nach Anspruch 4, den zusätzlichen Schritt umfassend: Durchführen einer TTL-Aktualisierung am Nutzlastabschnitt (IP_0, PL) des Pakets.

8. Verfahren nach Anspruch 1, außerdem den folgenden Schritt einschließend: Tunneln zwischen mindestens einem ersten Serving-Knoten und einem zweiten Serving-Knoten (GGSN, SGSN), wobei der erste Knoten IP-Fragmente (IP_0', PL_A, IP_0", PL_B) eines ersten IP-Pakets (IP__0) mit einer ersten Nutzlast (PL) empfängt, wobei der erste Serving-Knoten

- empfangene IP-Fragmente (IP_0', IP_0") einschließlich eines ersten fragmentierten IP-Pakets (IP_0') zwischenspeichert, bis alle Fragmente des ersten gegebenen IP-Pakets (IP _°) empfangen worden sind,
- ein Pseudopaket bildet, umfassend: einen ersten Tunnel-IP-Header (IP_2'), der ein erstes Fragment anzeigt, einen Zwischenabschnitt (UDP_2), ein Tunnelfeld (GTP_2), den IP-Header des ersten fragmentierten IP-Pakets (IP_0') und alle Nutzlastfragmente des ersten IP-Pakets (PL_A, PL_B, ...), wobei:
- der zweite Prüfsummenwert (HC _2) anhand des Pseudopakets berechnet wird, wobei mindestens alle Nutzlastfragmente des ersten IP-Pakets einbezogen werden und der Prüfsummenwert im Zwischenabschnitt (TCP/UDP_2, III, V) gespeichert wird,
- ein erstes Tunnelungspaket gebildet und übertragen wird, das folgendes umfasst: den Tunnel-IP-Header (IP_2'), einen Zwischenabschnitt (UDP_2), der den berechneten Prüfsummenwert (HC_2) aufweist, ein Tunnelfeld (GTP_2), den IP-Header des ersten fragmentierten IP-Pakets (IP_0') und das erste Nutzlastfragment des ersten IP-Pakets (PL_A).

9. Verfahren nach Anspruch 8, das ein nachfolgendes Tunnelungspaket bildet und überträgt, umfassend:

   einen nachfolgenden Tunnel-IP-Header (IP 2'), der ein nachfolgendes Fragment und ein nachfolgendes Nutzlastfragment (PL_B) anzeigt.

10. Verfahren nach Anspruch 8, wobei der zweite berechnete Prüfsummenwert (HC_2) ferner den Zwischenabschnitt (UDP_2), das Tunnelfeld (GTP_2) und den IP-Header des ersten fragmentierten IP-Pakets (IP_0') einbezieht.

11. Verfahren nach Anspruch 8, wobei das erste fragmentierte Paket erneut getunnelt wird, indem der Tunnel-IP-Header (IP_2; IP_1), der Zwischenabschnitt (UDP_2; UDP_1) und das GTP-Tunnelfeld (GTP_2; GTP_1) ersetzt werden.

12. Verfahren nach Anspruch 11, wobei der Prüfsummenwert des Zwischenabschnitts nach einem der Ansprüche 4 bis 6 berechnet wird.

13. Verfahren nach Anspruch 9, wobei
   der Tunnel-IP-Header (IP_2") des nachfolgenden Tunnelungspakets mit einem IP-Header zum erneuten Tunneln (IP_1") ausgetauscht wird, wobei der Rest des nachfolgenden Tunnelungspakets unverändert bleibt.

14. Verfahren nach Anspruch 13, wobei Enttunnelung durchgeführt wird durch:

   Zwischenspeichern von Fragmenten eines gegebenen Tunnel-IP-Headers (IP_1', IP_1"; IP_1 bis alle Fragmente empfangen worden sind,
   Herauslösen eines ersten IP-Headers (IP_0) aus dem ersten Tunnelungspaket (IP_0'),
   Kombinieren des herausgelösten ersten IP-Headers und aller Nutzlasten in einem Paket, das für das Zugangsnetz (LLC, IP_0, PL) bestimmt ist.

**Revendications**

1. Procédé de réalisation d'une tunnélisation comprenant les étapes de:

   - réception d'un premier paquet (J) comportant une première valeur de total de contrôle stockée (HC_J) qui couvre au moins des parties du premier paquet;
   - encapsulage du premier paquet (J) en appliquant un en-tête (K) au premier paquet;
   - calcul d'une seconde valeur de total de contrôle (dC_K) qui couvre au moins des parties de l'en-tête (K) mais qui ne couvre pas des parties couvertes par le premier total de contrôle;
   - calcul et assignation d'une troisième valeur de total de contrôle (HC_K) en tant que somme de compléments à un de la première valeur de total de contrôle et de complément à un de la seconde valeur de total de contrôle (III, V),
   - stockage de la valeur de total de contrôle assignée (HC_K) dans l'en-tête (K); et
   - transmission du paquet encapsulé (J, K).

2. Procédé de réalisation d'une détunnélisation comprenant les étapes de:

   - réception d'un paquet tunnélisé (K) comprenant un paquet encapsulé (J);
   - extraction d'une première valeur de total de contrôle stockée (HC_J) qui couvre au moins des parties du paquet encapsulé;
   - calcul d'une seconde valeur de total de contrôle (dC_K) qui couvre au moins certaines parties de l'en-tête (K) mais qui ne couvre pas des parties couvertes par la première valeur de total de contrôle (HC_J);

- calcul d'une troisième valeur de total de contrôle (HC_J + ~dC_K) en tant que somme de compléments à un de la première valeur de total de contrôle et de complément à un de la seconde valeur de total de contrôle;
- extraction d'une quatrième valeur de total de contrôle stockée (HC_K) correspondant au paquet tunnélisé; et
- comparaison des troisième et quatrième valeurs de total de contrôle l'une avec l'autre et si lesdites troisième et quatrième valeurs de total de contrôle sont égales, estimation du fait qu'au moins l'en-tête (K) doit être intacte après transmission (IV).

3. Procédé selon la revendication 2, comprenant additionnellement l'étape de réalisation d'une mise à jour TTL sur le premier paquet (J).

4. Procédé de réalisation d'une retunnélisation comprenant les étapes de:

réception d'un paquet comprenant au moins une première partie d'en-tête IP (IP_1) présentant une adresse de source IP (IPsrc_1) et une adresse de destination IP (IPdst_1), une première partie intermédiaire (UDP_1) et une charge utile (IP_0, PL), un premier total de contrôle stocké (HC_1) stocké dans la première partie intermédiaire (UDP_1) couvrant au moins des parties de la première partie IP (IP_1), de la première partie intermédiaire (UDP_1) et de la charge utile (IP_0, PL);
- lecture de la première valeur de total de contrôle stockée (HC _1) à partir de la partie intermédiaire (UDP_1);
- mise à l'écart de la première partie d'en-tête IP (IP 1) et de la première partie intermédiaire (UDP_1) par rapport au paquet;
- addition d'une seconde partie d'en-tête IP (IP_2) présentant une adresse de source IP (IPsrc_2) et une adresse de destination IP (IPdst_2) et d'une seconde partie intermédiaire (UDP_2) au paquet;
- réalisation d'une somme de complément à un sur au moins un complément à un de la première adresse de source IP (~IPsrc_1), un complément à un de la première adresse de destination IP (~IPdst_1), de la seconde adresse de destination IP (IPdst_2) et de la seconde adresse de source IP (IPsrc_2);
- calcul d'une seconde valeur de total de contrôle au moyen d'un complément à un sur la somme (HC_2, VII); et
- stockage de ladite seconde valeur de total de contrôle dans la seconde partie intermédiaire (UDP_2).

5. Procédé selon la revendication 4, dans lequel la partie de charge utile comprend une zone GTP associée à un tunnel GTP, dans lequel la zone GTP est maintenue inchangée.

6. Procédé selon la revendication 4, comprenant en outre les étapes de:

- mise à l'écart d'une première zone GTP (GTP_1) associée à un premier tunnel GTP par rapport au paquet reçu;
- addition d'une seconde zone GTP (GTP_2) associée à un second tunnel GTP au paquet tunnélisé; et dans lequel

la somme de complément à un étant en outre réalisée sur la seconde zone GTP (GTP_2) et le complément à un étant réalisé sur la première zone GTP (~GTP_1).

7. Procédé selon la revendication 4, comprenant l'étape additionnelle de réalisation d'une mise à jour TTL sur la partie de charge utile (IP_0, PL) du paquet.

8. Procédé selon la revendication 1, mettant en outre en jeu la tunnélisation entre au moins un premier noeud de desserte et un second noeud de desserte (GGSN, SGSN), le premier noeud recevant des fragments IP (IP_0', PL_ A, IP_0", PL_B) d'un premier paquet IP (IP_0) présentant une première charge utile (PL), dans lequel:

le premier noeud de desserte

- tamponnant des fragments IP reçus (IP_0', IP_0") incluant un premier paquet IP fragmenté (IP_0') jusqu'à ce que tous les fragments du premier paquet IP donné (IP_0) soient reçus;
- formant un pseudo-paquet comprenant un premier en-tête IP de tunnel (IP_2') indicatif d'un premier fragment, une partie intermédiaire (UDP_2), une zone de tunnel (GTP_2), l'en-tête IP du premier paquet IP fragmenté (IP_0') et tous les fragments de charge utile du premier paquet IP (PL_A, PL _B...), dans lequel

la seconde valeur de total de contrôle (HC_2) est calculée sur le pseudo-paquet en couvrant au moins tous les fragments de charge utile du premier paquet IP et en stockant la valeur de total de contrôle dans la partie intermédiaire (TCP/UDP_2, III, V),

- formant et transmettant un premier paquet de tunnélisation comprenant l'en-tête de tunnel (IP_ 2'), une partie intermédiaire (UDP_ 2) incluant la valeur de total de contrôle calculée (HC_2), une zone de tunnel (TP_2), l'en-tête IP du premier paquet IP fragmenté (IP_0') et le premier fragment de charge utile du premier paquet IP (PL_A).

9. Procédé selon la revendication 8, formant et transmettant un paquet de tunnélisation suivant comprenant:

   un en-tête IP de tunnel suivant (IP_2') indicatif d'un fragment suivant et d'un fragment de charge utile suivant (PL_B).

10. Procédé selon la revendication 8, dans lequel la seconde valeur de total de contrôle calculée (HC_2) couvre en outre la partie intermédiaire (UDP_2), la zone de tunnel (GTP_2), l'en-tête IP du premier paquet IP fragmenté (IP_0').

11. Procédé selon la revendication 8, dans lequel le premier paquet fragmenté est retunnélisé en remplaçant l'en-tête IP de tunnel (IP_2; IP_1), la partie intermédiaire (UDP_2; UDP_1), la zone de tunnel GTP (GTP_2, GTP_1).

12. Procédé selon la revendication 11, dans lequel la valeur de total de contrôle de la partie intermédiaire est calculée conformément à l'une quelconque des revendications 4 à 6.

13. Procédé selon la revendication 9, dans lequel:

    l'en-tête IP de tunnel (IP_2") du paquet de tunnélisation suivant est échangé contre un en-tête IP de retunnélisation (IP_1"), le reste du paquet de tunnélisation suivant étant non amendé.

14. Procédé selon la revendication 13, dans lequel la détunnélisation est réalisée en:

    tamponnant des fragments d'un en-tête de tunnel IP donné (IP 1'; IP_1"; IP_1"') jusqu'à ce que tous les fragments soient reçus;
    résolvant un premier en-tête IP (IP_0) par rapport au premier paquet de tunnélisation (IP_0'); et
    combinant le premier en-tête IP résolu et toutes les charges utiles dans un paquet destiné au réseau d'accès (LLC, IP_0, PL).

Internet

Server

BSC

GTP_2[IMSI_3]

J

FR

GTP_2[IMSI_7]

GGSN

F

SGSN

C

A

B

IP_ADD_C

IP_ADD_F

GTP_1[IMSI_3]

H

RNC

MT [IMSI_3]

Fig. 1 - prior art

| IP_F; CRC_3 | TCP_29; CRC_4 | PL |
|---|---|---|

SGSN-G - - - - - - - - - - - - - - - - - - - - - - - - - - - - - - - - - - - - - - - -

| IP_C; CRC_1 | UDP_10; CRC_2 | GTP_2; IMSI_3 | IP_F; CRC_3 | TCP_29; CRC_4 | PL |
|---|---|---|---|---|---|

CRC_1 ⟷

CRC_3 ⟷

CRC_4 ⟷

CRC_2 ⟷

GGSN - - - - - - - - - - - - - - - - - - - - - - - - - - - - - - - - - - - - - - - -

| IP_F; CRC_3 | TCP_29; CRC_4 | PL |
|---|---|---|

Fig. 2 – prior art

EP 1 599 959 B1

| Ver | HL | ToS | | Total Length | |
|---|---|---|---|---|---|
| IP Identifier | | | Flag | Fragment Offset | |
| TTL | | Proto | | Checksum (HC_1) | |
| IP Src [Add_A] | | | | | |
| IP Dst [Add_C] | | | | | |
| Options (optional) | | | | | |
| Payload | | | | | |

Fig. 3 – Prior art

| IP Src | |
|---|---|
| IP Dst | |
| Source Port | Destination Port |
| Length | Checksum (HC) |
| Payload | |

Fig. 4 – Prior art

IP ps h

| IP Src [Add_A] |
| IP Dst [Add_C] |

UDP ps h

HC_2

| Source Port | Destination Port |
| Length | Checksum (HC_2) |

GTP h

| Vers, Flags | Mess. Type | Length |
| TEID | | |
| Optional Fields ind. by flags | GTP head. length | |
| IPlength and other Payload | | |

Fig. 5 – Prior art

IP ps h

| IP Src [Add_A] |
| IP Dst [Add_F] |

TCP h

HC_4

| Source Port | | Destination Port | |
| Seq Nr | | | |
| Ack Nr | | | |
| Data | Reser | Flags | Window |
| Checksum (HC_4) | | | Urgent pointer |
| Options | | | Padding |
| Payload | | | |

Fig. 6 – Prior art

K

J

| HC_K | HC_J |
|------|------|

dC_K

HC_J; C_J

HC_K; C_K

**Fig. 7**

RNC

HC_1

IP_dst1, IP-src1

| IP 1 | UDP 1 | GTP 1 | IP 0 | PL |
|------|-------|-------|------|-----|

SGSN-W

HC_2

| IP 2 | UDP 2 | GTP 2 | IP 0 | PL |
|------|-------|-------|------|-----|

IP_dst2, IP-src2

GGSN

**Fig. 9**

Fig. 8

SERVER

IP 0 | PL

INTERNET

IP 0' | PL A          IP 0" | PL B

GGSN

HC_2A

IP 2A | UDP 2A | GTP 2A | IP 0' | PL A

HC_2B

IP 2B | UDP 2B | GTP 2B | IP 0" | PL B

SGSN

IP 1A | UDP 1A | GTP 1A | IP 0' | PL A

IP 1B | UDP 1B | GTP 1B | IP 0" | PL B

RNC

IP 0' | PL A          IP 0" | PL B

MT

Fig. 10

SERVER

IP 0 | CR | PL

INTERNET

IP 0' | CR | PL A          IP 0" | PL B

GGSN                                                    Pseudo
                                                        packet
         HC_2

IP 2' | UDP 2 | GTP 2 | IP 0' | CR | PL A | PL B
                        HC_2

IP 2" | PL B

SGSN

IP 1' | UDP 1 | GTP 1 | IP 0' | CR | PL A

IP 1" | PL B

RNC

LLC | IP 0 | PL

MT

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5815516 A

- JP 203046565 B